# EUROPÄISCHE PATENTSCHRIFT

(11) **EP 0 742 089 B1**
(45) Veröffentlichungstag und Bekanntmachung des Hinweises auf die Patenterteilung: **28.02.2001**
(21) Anmeldenummer: 96107491.1
(22) Anmeldetag: 10.05.1996
(51) Int. Cl.: B29C 33/72, B08B 7/00

(54) **Verfahren und Vorrichtung zum Reinigen von Vulkanisationsformen**
Method and apparatus for cleaning a vulcanization mold
Dispositif et procédé de nettoyage d'un moule de vulcanisation

(30) Priorität: 11.05.1995 DE 19517218
(43) Veröffentlichungstag der Anmeldung: 13.11.1996
(73) Patentinhaber: Uniroyal Englebert Reifen GmbH, D-52068 Aachen (DE)
(72) Erfinder: Pontzen, Leo, 52072 Aachen (DE)
(74) Vertreter: Schneider, Egon

(56) Entgegenhaltungen:
- EP-A- 0 475 806
- WO-A-94/21418
- WO-A-95/11764
- DE-A- 4 202 074
- GB-A- 269 721
- US-A- 3 091 557

## Beschreibung

Die Erfindung betrifft ein Verfahren und eine vorrichtung zum Reinigen von Heizformen zum vulkanisieren von Fahrzeugreifen.

Heizformen zum Vulkanisieren von Kraftfahrzeug-Luftreifen verschmutzen durch Ausgasung während des Vulkanisationsprozesses relativ stark. Dabei baut sich auf der Formenoberfläche ein Belag auf, der ca. 0,1-0,2 mm stark sein kann. Dieser Belag platzt durch Temperaturschwankungen unregelmäßig ab, was zu Fremdkörpern auf der Oberfläche der fertigen Reifen führen kann. Treten derartige Fremdköper auf der Reifenoberfläche auf, so ist die gesamte Produktion zu stoppen, was zu erheblichen Produktionsausfällen und Maschinenstandzeiten führt.

Aber auch ohne derartige Fremdkörper müssen die Heizformen regelmäßig nach ca. 1.000-3.000 Heizzyklen gewartet und gereinigt werden, um Belagabplatzungen vorzubeugen. Dazu müssen die Formen aus den Heizpressen ausgebaut und durch Sand, Keramik oder Eis gereinigt werden. Anschließend müssen alle Entlüftungsborungen neu aufgebohrt werden. Auch dies führt zu erheblichen Maschinenstandzeiten und Produktionsausfällen.

Aus WO-A- 94/2148 ist ein Verfahren zur Reinigung einer Form bekannt, bei dem Lichtimpulse aus einem Laser durch eine Öffnung der Form unter einem variablen Einfallswinkel von außen hineingestrahlt werden.

Aufgabe der vorliegenden Erfindung ist es, ein Verfahren zu schaffen, mit dem eine schnelle und problemlose Reinigung der Heizformen von Reifenheizpressen durchgeführt werden kann.

Gelöst wird diese Aufgabe durch die Merkmale des Anspruchs 1.

Zur weiteren Ausgestaltung ist es vorgesehen, daß eine transportable, mit dem Laserbearbeitungskopf versehene Laseranlage an die zu reinigende Heizpresse gefahren wird, der Laserbearbeitungskopf über den schwenkbaren Manipulator in Wirkverbindung mit den zu reinigenden Flächen der Heizform gebracht wird und die von dem Laserbearbeitungskopf von der Heizform gelösten Verunreinigungen mittels einer Absaugung einem Sammelbehälter zugeführt werden.

Eine Vorrichtung zur Durchführung dieses Verfahrens ist durch die Merkmale des Anspruchs 6 definiert.

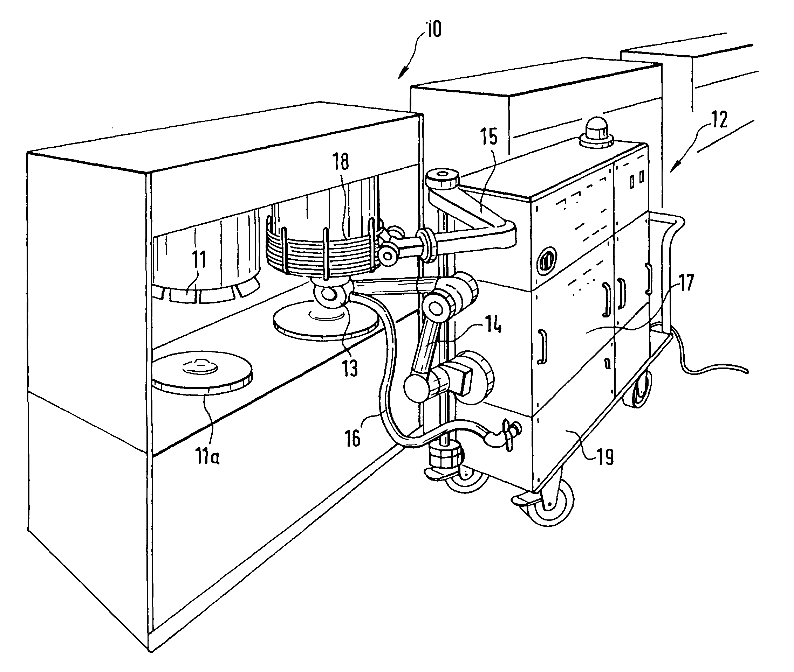

Durch diese Maßnahmen werden ein Verfahren und eine Vorrichtung geschaffen, mit der die Reifenheizformen einer Heizpresse im eingebauten Zustand vor Ort schnell und problemlos gereinigt werden können. Der langwierige Ausbau der Formen kann entfallen und bei den ersten Anzeichen von Abplatzungen von Verunreinigungen kann sofort reagiert und die betroffene Form wieder in gebrauchsfertigen Zustand versetzt werden. Das Verfahren kann auch vorbeugend eingesetzt werden.
Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschreiben.

In der einzigen Figur ist perspektivisch eine Reifenheizpresse 10 schematisch dargestellt, in der eine obere Heizform 11 und eine untere Heizform 11a vorgesehen sind. An die Reifenheizpresse 10 ist eine transportable Laserbearbeitungsanlage 12 herangefahren.

Die Laserbearbeitungsanlage 12 besteht aus einem Laserbearbeitungskopf 13, der an einem Manipulator 15 schwenkbar angeordnet ist. Dem Laserbearbeitungskopf 13 ist eine Schutzglocke 18 zugeordnet, mit der seine Umgebung vor schädlicher Strahlung und Lärm geschützt werden kann.

Mit Hilfe des Manipulators 15 kann der Bearbeitungskopf 13 PLC-gesteuert der Formengeometrie der zu reinigenden Heizform 11 bzw. 11a folgen.

Die transportable Laseranlage 12 ist mit einer Strahlquelle 17 versehen, von der über einen schwenkbaren, gelenkigen und mit entsprechenden Spiegeln versehenen Strahlarm 14 die erzeugten Lichtimpulse an den Laserbearbeitungskopf 13 übertragen werden können.

Als Strahlquelle ist dabei ein CO₂-Laser vorgesehen. Die von dem CO₂-Laser erzeugten Lichtimpulse werden optisch gebündelt und über den flexiblen Strahlarm 14 zu dem Wirkungsgebiet geleitet.

Mit Hilfe der Lichtimpulse des Laserbearbeitungskopfes 13 können Verunreinigungen von dem Heizformen 11 und 11a abgesprengt werden. Diese abgesprengten Schmutzpartikel werden über eine Absaugung 16 abgesaugt und in einem Sammelbehälter 19 zur Entsorgung gesammelt.

Die Vorrichtung ist sowohl zum Reinigen von Formen für Fahrzeugluftreifen als auch von solchen für Vollreifen geeignet.

### Bezugszeichen

- 10: Reifenheizpresse
- 11, 11a: Heizform
- 12: transportable Laseranlage
- 13: Laserbearbeitungskopf
- 14: Strahlarm
- 15: Manipulator
- 16: Absaugung
- 17: Strahlquelle
- 18: Schutzglocke
- 19: Sammelbehälter

## Patentansprüche

1. Verfahren zum Reinigen von Heizformen (11, 11a) zum Vulkanisieren von Fahrzeugreifen mit einem Laserbearbeitungskopf (13) einer Laseranlage, wobei die Lichtimpulse von der Laserstrahlquelle zum Laserbearbeitungskopf (13) optisch übertragen werden, bei dem der Laserbearbeitungskopf der Laseranlage über einen schwenkbaren Manipulator (5) in Wirkverbindung mit den zu reinigenden Flächen der Heizform gebracht wird, bei dem der Laserbearbeitungskopf der Formengeometrie der zu reinigenden Flächen der Heizform folgt und dabei die zu reinigenden Flächen von der Laseranlage mit dem Laserbearbeitungskopf gereinigt werden.

2. Verfahren zum Reinigen von Heizformen (11,11a) zum Vulkanisieren von Kraftfahrzeug-Luftreifen nach Anspruch 1, dadurch gekennzeichnet, daß eine transportable Laservorrichtung (12) verwendet wird.

3. Verfahren zum Reinigen von Heizformen (11,11a) zum Vulkanisieren von Kraftfahrzeug-Luftreifen nach den Ansprüchen 1 oder 2, dadurch gekennzeichnet, daß eine an sich bekannte, mit einem Laserbearbeitungskopf (13) versehene Laseranlage an die zu reinigende Heizpresse gefahren wird, der Laserbearbeitungskopf über einen schwenkbaren Manipulator (15) in Wirkverbindung mit den zu reinigenden Flächen der Heizform gebracht wird und die von dem Laserbearbeitungskopf von der Heizform gelösten Verunreinigungen mittels einer Absaugung einem Sammelbehälter zugeführt werden.

4. Verfahren nach einem oder mehreren der Ansprüche 1 bis 3, dadurch gekennzeichnet, daß der Laserbearbeitungskopf (13) PLC-gesteuert die Formengeometrie der zu reinigenden Heizform abfährt.

5. Verfahren nach einem oder mehreren der Ansprüche 1 bis 4, dadurch gekennzeichnet, daß die von einer Laserstrahlquelle erzeugten Lichtimpulse optisch gebündelt und über die flexible Strahlführung (14) mit Spiegeln in die im Bearbeitungskopf befindliche Strahlrotation geleitet werden.

6. Heizformenreinigungsvorrichtung zur Durchführung des Verfahrens nach Anspruch 1 in einer Reifenheizpresse,
- mit einer Laserstrahlquelle (17)
- mit einem schwenkbaren Manipulator (15)
- mit einem steuerbaren Laserbearbeitungskopf (13), der an dem Manipulator (15) schwenkbar ausgebildet ist, und
- mit einem flexiblen Strahlarm (14) zur Übertragung der Lichtimpulse von der Laserstrahlquelle (17) an den Laserbearbeitungskopf (13)

7. Vorrichtung nach Anspruch 6, dadurch gekennzeichnet, daß die Laseranlage (12) transportabel ist.

8. Vorrichtung nach den Ansprüchen 6 und 7, bei der dem Laserbearbeitungskopf (13) eine Absaugung (16) zugeordnet ist.

9. Vorrichtung nach einem oder mehreren der Ansprüche 6 bis 8, dadurch gekennzeichnet, daß dem Laserbearbeitungskopf (13) eine Schutzglocke zugeordnet ist.

10. Vorrichtung nach einem oder mehreren der Ansprüche 6 bis 9, dadurch gekennzeichnet, daß die Laseranlage (12) ein CO₂-Laser ist.

11. Vorrichtung nach einem oder mehreren der Ansprüche 6 bis 10, dadurch gekennzeichnet, daß die Lichtimpulse optisch gebündelt dem Laserbearbeitungskopf (13) zuführbar sind.

12. Vorrichtung nach einem oder mehreren der Ansprüche 8 bis 11, dadurch gekennzeichnet, daß die Absaugung (16) mit einem Sammelbehälter (19) verbunden ist.

## Claims

1. Method of cleaning heating moulds (11, 11a) for vulcanising vehicle tyres utilising a laser machining head (13) of a laser system, wherein the light pulses are optically transmitted from the laser beam source to the laser machining head (13), wherein the laser machining head of the laser system is brought into operative connection with the areas of the heating mould which are to be cleaned via a pivotable manipulator (15), wherein the laser machining head follows the mould geometry of the areas of the heating mould which are to be cleaned, and wherein the areas to be cleaned are cleaned by the laser system utilising the laser machining head.

2. Method of cleaning heating moulds (11, 11a) for vulcanising pneumatic automative vehicle tyres according to claim 1, characterised in that a transportable laser apparatus (12) is used.

3. Method of cleaning heating moulds (11, 11a) for vulcanising pneumatic automative vehicle tyres according to claims 1 or 2, characterised in that a laser system, which is known per se and is provided with a laser machining head (13), is moved to the heating press which is to be cleaned, the laser machining head is brought into operative connection with the areas of the heating mould which are to be cleaned via a pivotable manipulator (15), and the impurities, which are released from the heating mould by the laser machining head, are supplied to a storage tank by means of an extraction system.

4. Method according to one or more of claims 1 to 3, characterised in that the laser machining head (13) traces the mould geometry of the heating mould to be cleaned in a PLC-controlled manner.

5. Method according to one or more of claims 1 to 4, characterised in that the light pulses, which are generated by a laser beam source, are optically bundled and conducted into the beam rotation, present in the machining head, via the flexible beam guiding means (14) which is provided with mirrors.

6. Heating mould cleaning apparatus for accomplishing the method according to claim 1 in a tyre heating press,
- having a laser beam source (17),
- having a pivotable manipulator (15),
- having a controllable laser machining head (13), which is pivotably provided on the manipulator (15), and
- having a flexible beam guiding arm (14) for transmitting the light pulses from the laser beam source (17) to the laser machining head (13).

7. Apparatus according to claim 6, characterised in that the laser system (12) is transportable.

8. Apparatus according to claims 6 and 7, wherein an extraction system (16) is associated with the laser machining head (13).

9. Apparatus according to one or more of claims 6 to 8, characterised in that a protective dome is associated with the laser machining head (13).

10. Apparatus according to one or more of claims 6 to 9, characterised in that the laser system (12) is a CO₂ laser.

11. Apparatus according to one or more of claims 6 to 10, characterised in that the light pulses are suppliable to the laser machining head (13) in an optically bundled manner.

12. Apparatus according to one or more of claims 8 to 11, characterised in that the extraction system (16) is connected to a storage tank (19).

## Revendications

1. Procédé de nettoyage de moules chauffés (11, 11a), pour la vulcanisation de pneumatiques pour véhicules, avec une tête de nettoyage au laser (13) d'une installation à laser, les impulsions lumineuses fournies par la source de rayon laser étant transmises optiquement à la tête de nettoyage au laser (13), dans lequel la tête de nettoyage au laser de l'installation à laser est reliée fonctionnellement aux faces à nettoyer du moule chauffé par l'intermédiaire d'un manipulateur (5) susceptible de pivoter, dans lequel la tête de nettoyage au laser suit la géométrie de moulage des faces à nettoyer du moule chauffé et les faces à nettoyer étant alors nettoyées par l'installation à laser, à l'aide de la tête de nettoyage au laser.

2. Procédé de nettoyage de moules chauffés (11, 11a), pour la vulcanisation de pneumatiques pour véhicules selon la revendication 1, caractérisé en ce qu'un dispositif laser (12) transportable est utilisé.

3. Dispositif de nettoyage de moules chauffés (11, 11a), pour la vulcanisation de pneumatiques pour véhicules selon les revendications 1 ou 2, caractérisé en ce qu'une installation à laser, connue en soi, munie d'une tête de nettoyage au laser (13) est déplacée sur la plage de chauffage à nettoyer, la tête de nettoyage au laser est placée en liaison fonctionnelle avec les faces à nettoyer du moule chauffé, par l'intermédiaire d'un manipulateur (15) susceptible de pivoter, et les impuretés, désolidarisées du moule chauffé par la tête de nettoyage au laser, sont amenées à un réservoir collecteur au moyen d'un processus d'aspiration.

4. Procédé selon l'une ou plusieurs des revendications 1 à 3, caractérisé en ce que la tête de nettoyage au laser (13) suit, sous la commande d'un PLC (contrôleur à logique programmable), la géométrie de moulage du moule chauffé à nettoyer.

5. Procédé selon l'une ou plusieurs des revendications 1 à 4, caractérisé en ce que les impulsions lumineuses générées par une source de rayon laser sont focalisées optiquement et sont dirigées par l'intermédiaire du dispositif de guidage de rayon (14) flexible, à l'aide de miroirs, dans l'élément à rotation de rayon se trouvant dans la tête de nettoyage.

6. Dispositif de nettoyage de moules chauffés pour la mise en oeuvre du procédé selon la revendication 1, dans une presse chauffée pour pneumatiques,
- avec une source de rayon laser (17)
- avec un manipulateur (15) susceptible de pivoter,
- avec une tête de nettoyage au laser (13) susceptible d'être commandée, réalisée de façon à pouvoir pivoter sur le manipulateur (15), et
- avec un bras émetteur de rayons (14) flexible, pour assurer la transmission des impulsions lumineuses de la source de rayon laser (17) à la tête de nettoyage laser (13).

7. Dispositif selon la revendication 6, caractérisé en ce que l'installation à laser (12) est transportable.

8. Dispositif selon les revendications 6 à 7, dans lequel un dispositif d'aspiration (16) est associé à la tête de nettoyage au laser (13).

9. Dispositif selon une ou plusieurs des revendications 6 à 8, caractérisé en ce qu'une cloche de protection est associée à la tête de nettoyage au laser (13).

10. Dispositif selon une ou plusieurs des revendications 6 à 9, caractérisé en ce que l'installation à laser (12) est constituée par un laser au CO₂.

11. Dispositif selon une ou plusieurs des revendications 6 à 10, caractérisé en ce que les impulsions lumineuses sont susceptibles d'être fournies, de façon focalisée optiquement, à la tête de nettoyage au laser (13).

12. Dispositif selon une ou plusieurs des revendications 8 à 11, caractérisé en ce que le dispositif d'aspiration (16) est relié à un récipient collecteur (19).
